Europäisches Patentamt

(19) European Patent Office

Office européen des brevets

(11) Numéro de publication : **0 280 625 B1**

(12) **FASCICULE DE BREVET EUROPEEN**

(45) Date de publication du fascicule du brevet :
20.03.91 Bulletin 91/12

(51) Int. Cl.$^5$ : **F16B 13/00**

(21) Numéro de dépôt : **88400424.3**

(22) Date de dépôt : **24.02.88**

(54) **Cheville de suspension à fil replié.**

(30) Priorité : 25.02.87 FR 8702484
10.11.87 FR 8715537

(43) Date de publication de la demande :
31.08.88 Bulletin 88/35

(45) Mention de la délivrance du brevet :
20.03.91 Bulletin 91/12

(84) Etats contractants désignés :
BE DE ES FR GB IT NL SE

(56) Documents cités :
EP-A- 0 084 499
AT-B- 118 478
BE-A- 625 728
DE-C- 209 703
FR-A- 1 553 452
US-A- 2 878 668
US-A- 3 472 120
US-A- 4 068 481

(73) Titulaire : **SOCIETE DE PROSPECTION ET D'INVENTIONS TECHNIQUES SPIT**
**Route de Lyon**
**F-26501 Bourg-Les-Valence Cédex (FR)**

(72) Inventeur : **Revol, Gérard**
**Chateaudouble**
**F-26120 Chabeuil (FR)**
Inventeur : **Roillet, Maxime**
**Fauconnières**
**F-26120 Chabeuil (FR)**
Inventeur : **Barthomeuf, Jean-Paul**
**Alixan Le Village**
**F-26300 Bourg De Peage (FR)**

(74) Mandataire : **Bloch, Gérard et al**
**2, square de l'Avenue du Bois**
**F-75116 Paris (FR)**

## Description

La présente invention concerne une cheville de suspension comprenant un fil replié sur lui-même et formant un oeillet de fixation, une des extrémités du fil, destinée à être introduite dans un trou d'ancrage étant agencée pour, sous l'action d'une traction vers l'extérieur exercée sur l'oeillet, coopérer avec des moyens d'ancrage et ancrer la cheville dans la paroi du trou.

Les chevilles de suspension sont utilisées principalement pour la fixation de faux-plafonds, leur oeillet de fixation assurant la liaison avec une barre, un fil, un rail ou tout autre moyen analogue de suspension.

La plupart des chevilles de suspension normalement utilisées sont de fabrication coûteuse, en raison des opérations de pressage, de perçage, de décolletage ou de traitement thermique auxquelles il faut, selon les cas, les soumettre.

On connaît, par le document US-A-2 878 668, une cheville du type mentionné ci-dessus, dont l'extrémité d'ancrage du fil, l'autre ne jouant pas de rôle, est recourbée en forme de crochet pour entraîner un coin contre une cale d'ancrage, pouvoir ainsi exercer un effet de coin, et assurer l'ancrage du coin et de la cale et donc de la cheville, dans le trou.

Toutefois, et du fait qu'une des extrémités du fil ne joue aucun rôle dans l'ancrage, la section résistante de cette cheville de l'art antérieur est trop faible.

On connaît aussi, par le document BE-A-625 728, une cheville de suspension dont le fonctionnement est assez similaire.

Toutefois, cette cheville comporte deux fils distincts et non réunis, dont un servant de levier, et son ancrage s'effectue surtout par flexion des extrémités des deux fils.

C'est en s'inspirant des enseignements de ces deux documents, sans pour autant les combiner, que la demanderesse propose différentes formes de réalisation de cheville de suspension à un seul fil et à section efficace d'ancrage satisfaisante.

La présente invention concerne une cheville de suspension comprenant un fil replié sur lui-même en formant un oeillet de fixation, une des extrémités du fil, destinée à être introduite dans un trou d'ancrage, étant agencée pour, sous l'action d'une traction vers l'extérieur du trou exercée sur l'oeillet, coopérer avec des moyens d'ancrage et ancrer la cheville dans la paroi du trou, cheville caractérisée par le fait que le fil est un fil à face plane replié sur lui-même le long de sa face plane, les deux extrémités du fil replié, opposées à l'oeillet sont destinées à être introduites dans le trou d'ancrage et elles sont agencées pour coopérer entre elles et former un tronc de cône d'expansion relativement indéformable et agencé pour, sous l'action de ladite traction, coopérer avec une douille d'ancrage expansible et ancrer la cheville.

La présente invention concerne aussi une cheville de suspension comprenant un fil replié sur lui-même en formant un oeillet de fixation, une des extrémités du fil, destinée à être introduite dans un trou d'ancrage, étant agencée pour, sous l'action d'une traction vers l'extérieur du trou exercée sur l'oeillet, coopérer avec des moyens d'ancrage et ancrer la cheville dans la paroi du trou, cheville caractérisée par le fait que le fil est un fil à face plane replié sur lui-même le long de sa face plane, les deux extrémités du fil replié, opposées à l'oeillet, sont destinées à être introduites dans le trou d'ancrage et elles comportent, chacune, une rampe d'expansion et sont repliées sur un coin d'expansion, solidaire en rotation des extrémités du fil, pour, lors de la traction sur l'oeillet, coopérer entre elles, en formant un corps relativement indéformable et avec le coin d'expansion, s'ancrer dans la paroi du trou et ancrer la cheville.

La présente invention concerne encore une cheville de suspension comprenant un fil replié sur lui-même en formant un oeillet de fixation, une des extrémités du fil, destinée à être introduite dans un trou d'ancrage, étant agencée pour, sous l'action d'une traction vers l'extérieur du trou exercée sur l'oeillet, coopérer avec des moyens d'ancrage et ancrer la cheville dans la paroi du trou, cheville caractérisée par le fait que le fil est un fil à face plane replié sur lui-même le long de sa face plane, les deux extrémités du fil replié, opposées à l'oeillet, sont destinées à être introduites dans le trou d'ancrage et elles sont agencées pour, sous l'action de ladite traction, coopérer entre elles, en formant un tronc de pyramide d'expansion relativement indéformable, et avec une douille d'ancrage expansible pour ancrer la cheville.

La présente invention concerne toujours une cheville de suspension comprenant un fil replié sur lui-même en formant un oeillet de fixation, une des extrémités du fil, destinée à être introduite dans un trou d'ancrage, étant agencée pour, sous l'action d'une traction vers l'extérieur du trou exercée sur l'oeillet, coopérer avec des moyens d'ancrage et ancrer la cheville dans la paroi du trou, cheville caractérisée par le fait que le fil est obtenu par matriçage d'un feuillard, les deux extrémités du fil sont destinées à être introduites dans le trou d'ancrage et elles sont agencées pour, sous l'action de ladite traction, coopérer entre elles en formant une portion cylindrique constituée par deux coquilles, ainsi qu'un tronc de cône d'expansion agencé pour coopérer avec une douille d'ancrage expansible et ancrer la cheville.

Dans ce mode de réalisation des moyens sont avantageusement prévus pour empêcher la déformation du corps d'extrémité qui comportent un disque de fermeture formé par un prolongement rabattu d'une des deux coquilles et qui prend appui sur l'autre des deux coquilles constitutives de la portion cylindrique.

L'invention sera mieux comprise à l'aide de la description suivante de plusieurs formes de réalisation de la cheville de l'invention, en référence aux dessins annexés sur lesquels :

- la figure 1 est une vue en perspective de la première forme de réalisation de la cheville de l'invention ;
- la figure 2 est une vue de face de la portion d'extrémité de la deuxième forme de réalisation de la cheville de l'invention ;
- la figure 3 est une vue de côté de la portion de cheville de la figure 2 ;
- la figure 4 est une vue en coupe transversale de la portion de cheville, de la figure 3, selon la ligne IV-IV ;
- la figure 5 est une vue en perspective de la portion d'extrémité de la troisième forme de réalisation de la cheville de l'invention ;
- la figure 6 est une vue en perspective d'une des extrémités du feuillard de départ d'une quatrième forme de réalisation de la cheville de l'invention, après découpe ;
- la figure 7 est une vue en perspective de l'extrémité de feuillard de la figure 6, après pliage ;
- la figure 8 est une vue en perspective de l'extrémité de feuillard de la figure 7, après matriçage ;
- la figure 9 est une vue latérale de la cheville des figures 6 à 8 ;
- la figure 10 est une vue en perspective d'une des extrémités du feuillard de départ d'une variante de réalisation de la cheville des figures 6 à 9 ;
- la figure 11 est une vue en coupe de la variante de la cheville réalisée à partir du feuillard de la figure 10, et
- la figure 12 est une vue en bout de la cheville de la figure 11.

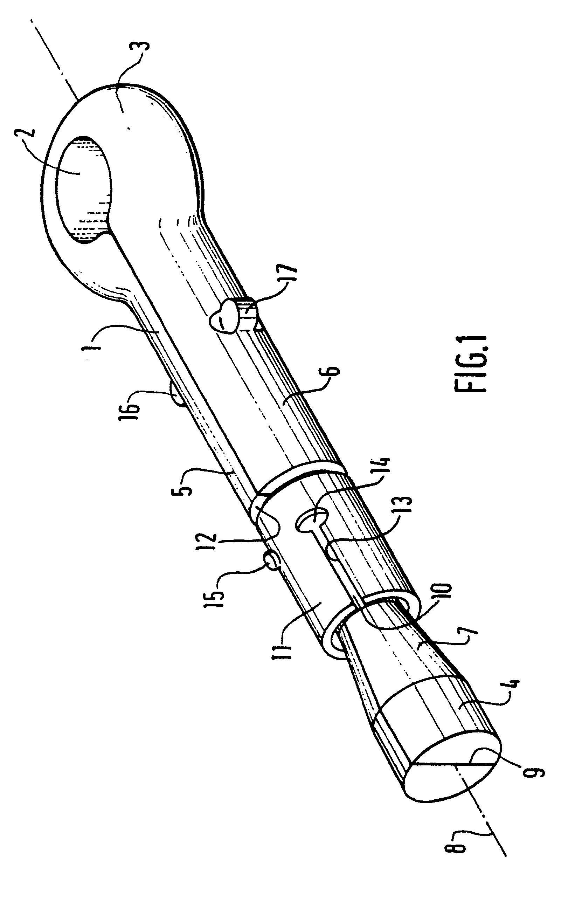

La cheville représentée sur la figure 1, qui est une cheville de suspension pour faux-plafond, a été formée à partir d'un fil 1 semi-cylindrique plein à face plane 2, c'est-à-dire à section droite semi-circulaire. A cet endroit, il convient d'ores et déjà de préciser que le fil de la cheville de l'invention pourrait avoir une section semi-elliptique ou rectangulaire.

Le fil 1 a été replié sur lui-même, le long de sa face plane 2, pour former un oeillet de fixation 3, à une extrémité des deux branches 5, 6 ainsi également formées, et, à l'autre extrémité, une portion de cylindre 4, de section circulaire formée de la juxtaposition, par leurs diamètres, de deux sections semi-cylindriques du fil de départ, et d'axe 8 s'étendant dans le plan de joint 9 des deux branches 5, 6, ces deux sections agissant l'une sur l'autre pour former un corps relativement indéformable, lors de la mise en tension de la cheville, abordée plus loin. Pour accentuer cet effet, des stries peuvent être ménagées sur les faces coopérant entre elles.

Les deux branches 5, 6, accolées, ont été façonnées, avant ou après repliement, sur une portion adjacent à la portion cylindrique d'extrémité 4 pour former une portion tronconique 7 d'axe 8. Au delà de cette portion tronconique 7, de l'autre côté par rapport à la portion cylindrique d'extrémité 4, les deux branches 5, 6 ont été façonnées pour former une autre portion cylindrique 10 de diamètre rétréci et un épaulement annulaire 12.

Sur la portion cylindrique rétrécie 10 est montée une douille cylindrique d'ancrage expansible 11, d'axe 8, de diamètre interne légèrement supérieur au diamètre de la portion rétrécie 10 et de diamètre externe sensiblement égal au diamètre de la section circulaire des deux branches 5, 6 accolées. Au repos, la douille 11 s'étend sensiblement entre la portion tronconique 7 et l'épaulement annulaire 12. Elle participe au maintien des branches dans leur position accolée. La douille 11 a été obtenue à partir d'une plaquette rectangulaire, roulée sur elle-même, avec accolement de deux bords opposés, non visibles sur la figure. Une fente d'expansion 13 supplémentaire y a été ouverte, parallèlement à l'axe 8, avec une ouverture d'extrémité 14 pour faciliter l'expansion. La douille 11 comporte des ergots 15 d'immobilisation.

Les branches, 5, 6 portent deux ergots de positionnement 16, 17, ici diamétralement opposés dans un même plan perpendiculaire à l'axe 8.

On a décrit une cheville formée à partir d'un fil à face plane. Il ne s'agit pas d'une caractéristique limitative de l'invention, même si elle est avantageuse. On pourrait en effet, au lieu de rabattre deux faces planes l'une sur l'autre, accepter de rabattre deux faces complémentaires, par exemple l'une convexe, l'autre concave, mais au prix d'une complication de formage inutile.

La cheville pourrait aussi être constituée d'un fil dit demi-jonc, qui, par rabattement, conduit à une section elliptique et non plus circulaire, ou bien d'un fil à section carrée ou rectangulaire, donnant une section rectangulaire.

Pour l'ancrage de la cheville de la figure 1, il est procédé de la manière maintenant décrite.

Ayant au préalable foré un trou dans le matériau récepteur, de diamètre légèrement supérieur au diamètre externe de la douille 11 mais légèrement inférieur à la distance hors tout entre les deux ergots de positionnement 16, 17, on introduit la cheville dans le trou par sa portion d'extrémité cylindrique 4, à l'aide d'un outil comme par exemple un marteau, jusqu'à ce que les ergots de positionnement viennent en butée contre le bord du trou. Les ergots de positionnement déterminent donc la profondeur d'enfoncement de la douille 11. Puis, à l'aide du même outil, servant cette fois de levier, on exerce, vers l'extérieur du trou, une traction sur la cheville, par son oeillet 3. La douille étant immobilisée en translation dès le début de la traction par ses ergots 15, le cône d'expansion 7 pénètre dans la douille qui va s'ouvrir jusqu'à ce qu'elle s'ancre dans la paroi du trou récepteur. La cheville est alors elle-même ancrée dans le trou.

Un seul outil a permis la pose de la cheville et son ancrage.

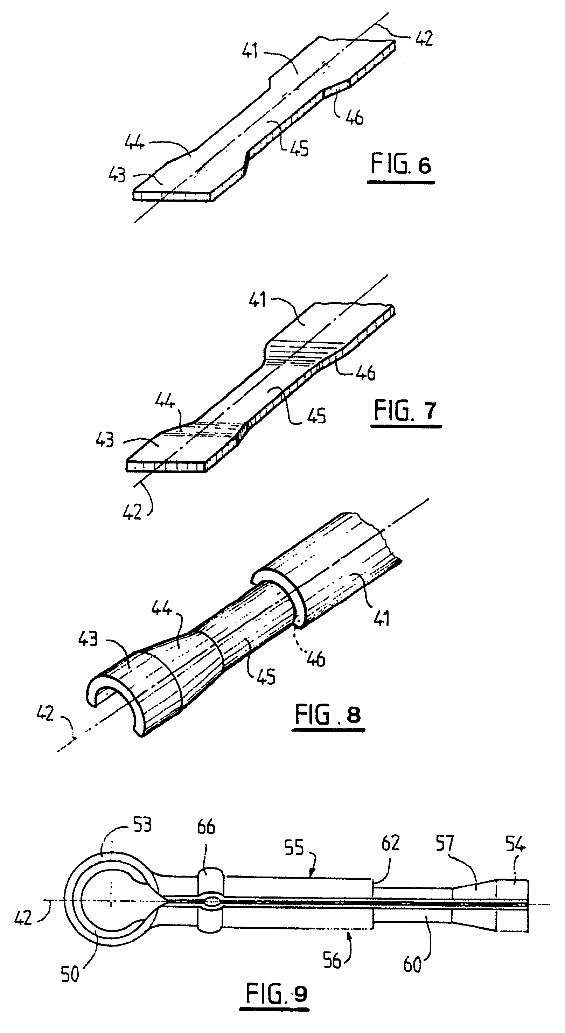

La figure 5 représente une variante de la cheville de la figure 1, dans laquelle les surfaces circulaire 10 et tronconique 7 de la figure 1 sont remplacées respectivement par des surfaces planes 18, 19, 20 et 21, 22, 23 pour conférer à la cheville des sections carrées, les surfaces 21, 22, 23, les plus proches des extrémités, formant un tronc de pyramide. Le côté du carré 18, 19 et 20 est tel que, d'une part, il ménage l'épaulement 12 et, d'autre part, il permet l'assemblage de la douille 11, comme dans la forme de réalisation de la figure 1.

On notera que, à la place d'une douille expansible, il est possible, dans une forme de réalisation de la cheville de l'invention, voisine de celles qui viennent d'être décrites, d'utiliser deux coins latéraux conformés pour coopérer avec deux rampes d'expansion opposées formées sur les deux extrémités du fil replié, respectivement.

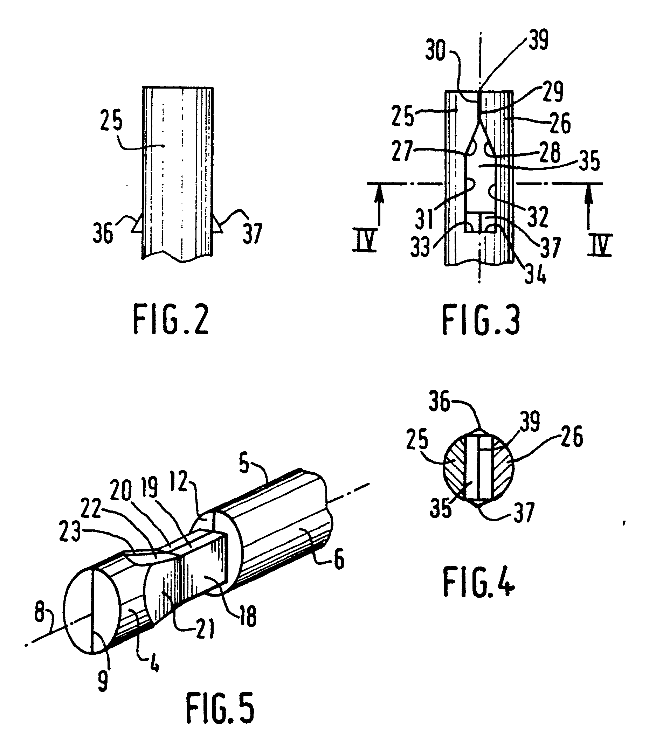

La forme de réalisation de la cheville représentée sur les figures 2 à 4, est identique à celle de la figure 1, à l'exception de son extrémité et de ses moyens d'ancrage.

Les deux extrémités du fil de départ, avant repliement des branches 25, 26 l'une sur l'autre, ont été conformées pour ménager respectivement, depuis les surfaces planes d'extrémité de départ 29, 30, deux rampes 27, 28, inclinées en sens inverses, et deux plats 31, 32 adjacents formant avec les surfaces planes de départ 29, 30 deux épaulements 33, 34. Après repliement, les portions d'extrémité des branches 25, 26 de la cheville sont rabattues sur un coin 35. De forme générale rectangulaire d'un côté, le coin 35, de l'autre côté, perpendiculaire au premier côté, a une section correspondant à l'évidement des branches, avec une portion rectangulaire à l'arrière, contre l'épaulement 33, 34, de largeur égale à la distance séparant les deux plats 31, 32, et une portion triangulaire à l'avant, entre les rampes 27, 28, avec, comme plan de symétrie, le plan de joint 39 des branches 25, 26 de la cheville. Le coin 35 possède deux ergots d'immobilisation 36, 37 qui font saillie hors des branches de la cheville, par les ouvertures ménagées par les rampes et les plats adjacents.

On notera que dans une forme de réalisation très semblable à celle qui vient d'être décrite, le coin pourrait être de forme générale conique et les rampes et plats des branches remplacés par des surfaces coniques correspondantes.

Pour l'ancrage de la cheville des figures 2-4, on procède comme pour celle de la figure 1. Mais dans ce cas, ce sont les extrémités des branches 25, 26 qui, dans leur mouvement de translation et par coopération avec le coin 35 immobilisé en translation par ses ergots 36, 37, s'écartent l'une de l'autre pour s'ancrer dans la paroi du trou d'ancrage.

La cheville représentée sur les figures 6 à 9, a été formée à partir d'un feuillard 41, c'est-à-dire une bande de tôle mince et longue, à deux axes de symétrie, l'un 42, longitudinal, et l'autre, perpendiculaire au premier.

Partant donc du feuillard considéré, on conforme chacune de ses portions d'extrémité longitudinales en découpant, latéralement des deux côtés de l'axe 42, une petite portion trapézoïdale pour ménager, depuis l'extrémité vers la portion médiane du feuillard, une portion rectangulaire 43, de même largeur que le feuillard initial, une portion trapézoïdale 44, adjacente à la portion 43 par sa grande base de même largeur, une portion rectangulaire 45, plus étroite et plus longue que la portion 43, adjacent à la portion trapézoïdale 44 par sa petite base, et raccordée à la portion médiane par deux épaulements 46, inclinés sur l'axe 42 (figure 6). Autour de la zone de raccordement des épaulements 46 à la portion 45 d'un côté du feuillard, et de la zone de raccordement des épaulements 46 à la portion médiane, de l'autre côté du feuillard, on rabat chaque portion d'extrémité 43, 44, 45 de 90° dans un sens et la portion médiane adjacente 41 du feuillard de 90° dans l'autre sens, et on plie la portion d'extrémité autour des deux bases de la portion trapézoïdale 44 respectivement dans deux sens opposés pour ramener la portion rectangulaire d'extrémité 43 sensiblement dans le même plan que la portion médiane 41 du feuillard ainsi découpé et conformé (figure 7).

Dans une matrice de forme appropriée, on déforme le feuillard, les portions rectangulaires d'extrémité 43 et la portion médiane 41, suivant un premier rayon de courbure, et les portions rectangulaires rétrécies 45, suivant un deuxième rayon de courbure plus petit que le premier, les portions trapézoïdales 44 étant déformées pour se raccorder aux portions adjacentes cylindriques (figure 8).

Le feuillard ainsi découpé, plié et déformé, en forme de fil, est replié sur lui-même, le long de l'axe 42 et sensiblement autour de l'axe transversal, pour former un oeillet de fixation 53, à une extrémité de deux branches 55, 56 et, à l'autre extrémité, une portion de cylindre 54, formée par les deux portions 43 alors en forme de coquille, une portion tronconique d'expansion 57, adjacente à la portion 54 et formée par les deux portions 44, et, au-delà, de l'autre côté par rapport à la portion cylindrique d'extrémité 54, une autre portion cylindrique 60, formée par les deux portions 45, de diamètre rétréci, et un épaulement annulaire 62, les portions 43, 44, 45 et 41, ces dernières entre l'oeillet 53 et l'épaulement 62, se rejoignant deux à deux par leurs deux bords respectifs suivant un même plan de joint (figure 9).

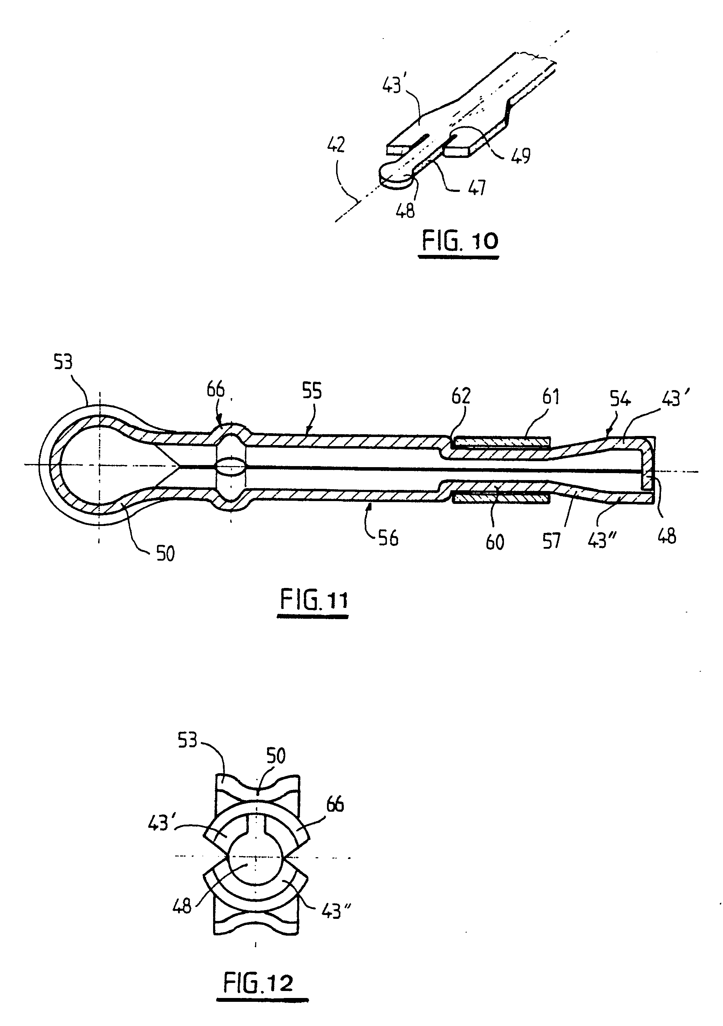

Dans une variante de réalisation de la cheville qui vient d'être décrite (figures 10, 11, 12), et les mêmes chiffres de référence étant repris pour désigner les mêmes moyens, on part d'un feuillard sensiblement plus long que précédemment pour, au-delà d'une des deux portions rectangulaires d'extrémité 43, ménager, toujours par découpe, une languette en saillie 47, prolongeant la portion rectangulaire d'extrémité le long de l'axe 42 et portant, en bout, un disque de fermeture 48, destiné à être rabattu, sensiblement de 90°, pour venir, après repliement du feuillard (du fil), entre les deux coquilles 43', 43" sensiblement dans leur plan d'extrémité, mais en butée contre la coquille 43" opposée à celle 43' portant ce disque de fermeture 48, et s'opposer ainsi à la fermeture ou l'aplatissement des deux coquilles. A cet effet, deux fentes 49 sont ménagées dans la portion rectangulaire 43' concernée, parallèlement à l'axe 42 et dans le prolongement des parois latérales de la languette 47, pour que le disque 48, après son rabattement et repliement du feuillard, vienne bien en appui, à l'intérieur, contre l'autre coquille 43" (figure 11).

Sur la portion cylindrique rétrécie 60 est montée une douille cylindrique d'ancrage expansible 61, d'axe 42, de diamètre interne légèrement supérieur au diamètre de la portion rétrécie 60 et de diamètre externe sensiblement égal au diamètre de la section circulaire des deux branches 55, 56 accolées. Au repos, la douille 61 s'étend sensiblement entre la portion tronconique 57 et l'épaulement annulaire 62. Elle participe au maintien des branches dans leur position accolée. La douille 61 a été obtenue à partir d'une plaquette rectangulaire, roulée sur elle-même, avec accolement de deux bords opposés. La douille 61 comporte des ergots d'immobilisation (non représentés).

Les branches 55, 56 portent un bourrelet de positionnement 66, dans un même plan perpendiculaire à l'axe 42, formé lors du formage du feuillard.

Toujours lors du formage du feuillard, il a ici été formé, par déplacement de matière, dans la partie centrale 41, destinée à devenir l'oeillet 53, une nervure 50 destinée à jouer, en tant que saillie interne, un rôle de raidisseur après repliement du feuillard (figures 9, 11 et 12).

Pour l'ancrage de cette dernière cheville, il est procédé de la manière maintenant décrite, analogue à la précédente.

Ayant au préalable foré un trou dans le matériau récepteur, de diamètre légèrement supérieur au diamètre externe de la douille 61 mais légèrement inférieur au diamètre du bourrelet de positionnement 66, on introduit la cheville dans le trou par sa portion d'extrémité cylindrique 54, à l'aide du même outil jusqu'à ce que le bourrelet de positionnement vienne en butée contre le bord du trou. Le bourrelet de positionnement détermine donc la profondeur d'enfoncement de la douille 61. Puis, à l'aide de l'outil, servant donc cette fois de levier, on exerce, vers l'extérieur du trou, une traction sur la cheville, par son oeillet 53. La douille étant immobilisée en translation dès le début de la traction par ses ergots d'immobilisation, le cône d'expansion 57, l'extrémité de la cheville formant un corps relativement indéformable grâce au disque de fermeture, pénètre dans la douille qui va s'ouvrir jusqu'à ce qu'elle s'ancre dans la paroi du trou récepteur. La cheville est alors elle-même ancrée dans le trou.

On notera qu'en l'absence du disque de fermeture, la coopération des bords des coquilles d'extrémité permettrait déjà d'éviter un écrasement trop facile de ces coquilles.

On notera également qu'on pourrait éviter, pour la formation de la cheville, l'étape illustrée par la figure 7 et passer directement de l'étape de la figure 6 à celle de la figure 8.

## Revendications

1. Cheville de suspension comprenant un fil (1) replié sur lui-même en formant un oeillet de fixation (3), une des extrémités du fil (1), destinée à être introduite dans un trou d'ancrage, étant agencée pour, sous l'action d'une traction vers l'extérieur du trou exercée sur l'oeillet, coopérer avec des moyens d'ancrage et ancrer la cheville dans la paroi du trou, cheville caractérisée par le fait que le fil (1) est un fil à face plane (2) replié sur lui-même le long de sa face plane, les deux extrémités (5, 6) du fil replié, opposées à l'oeillet (3) sont destinées à être introduites dans le trou d'ancrage et elles sont agencées pour coopérer entre elles et former un tronc de cône d'expansion (7) relativement indéformable et agencé pour, sous l'action de ladite traction, coopérer avec une douille d'ancrage expansible (11) et ancrer la cheville.

2. Cheville de suspension comprenant un fil (1) replié sur lui-même en formant un oeillet de fixation (3), une des extrémités du fil (1), destinée à être introduite dans un trou d'ancrage, étant agencée pour, sous l'action d'une traction vers l'extérieur du trou exercée sur l'oeillet, coopérer avec des moyens d'ancrage et ancrer la cheville dans la paroi du trou, cheville caractérisée par le fait que le fil est un fil à face plane (29) replié sur lui-même le long de sa face plane, les deux extrémités (25, 26) du fil replié, opposées à l'oeillet (3), sont destinées à être introduites dans le trou d'ancrage et elles comportent, chacune, une rampe d'expansion (27, 28) et sont repliées sur un coin d'expansion (35), solidaire en rotation des extrémités du fil, pour, lors de la traction sur l'oeillet (3), coopérer entre elles, en formant un corps relativement indéformable, et avec le coin d'expansion (35), s'ancrer dans la paroi du trou et ancrer la cheville.

3. Cheville de suspension comprenant un fil (1) replié sur lui-même en formant un oeillet de fixation (3 ; 53), une des extrémités du fil (1), destinée à être introduite dans un trou d'ancrage, étant agencée pour, sous l'action d'une traction vers l'extérieur du trou exercée sur l'oeillet, coopérer avec des moyens d'ancrage et ancrer la cheville dans la paroi du trou, cheville caractérisée par le fait que le fil est un fil à face plane replié sur lui-même le long de sa face plane, les deux extrémités (5, 6) du fil replié, opposées à l'oeillet (3), sont destinées à être introduites dans le trou d'ancrage et elles sont agencées pour, sous l'action de ladite traction, coopérer entre elles, en formant un tronc de pyramide d'expansion (21-23) relativement indéformable, et avec une douille d'ancrage expansible pour ancrer la cheville.

4. Cheville de suspension comprenant un fil (1) replié sur lui-même en formant un oeillet de fixation (53), une des extrémités du fil (1), destinée à être introduite dans un trou d'ancrage, étant agencée pour, sous l'action d'une traction vers l'extérieur du trou exercée sur l'oeillet, coopérer avec des moyens d'ancrage et ancrer la cheville dans la paroi du trou, cheville caractérisée par le fait que le fil est obtenu par matriçage d'un feuillard (41), les deux extrémités (55, 56) du fil sont destinées à être introduites dans le trou d'ancrage et elles sont agencées pour, sous l'action de ladite traction, coopérer entre elles, en formant une portion cylindrique (54), constituée par deux coquilles (43', 43"), ainsi qu'un tronc de cône d'expansion (57) agencé pour coopérer avec une douille d'ancrage expansible (61) et ancrer la cheville.

5. Cheville selon la revendication 4, dans laquelle sont prévus des moyens pour empêcher la déformation du corps d'extrémité (60, 57, 54) qui comportent un disque de fermeture formé par un prolongement rabattu (48) d'une (43') des deux coquilles et qui prend appui sur l'autre (43") des deux coquilles constitutives de la portion d'extrémité cylindrique (54).

6. Cheville selon l'une des revendications 1 et 2, les moyens d'ancrage (11 ; 35) comportent des moyens (15 ; 36, 37) d'immobilisation en translation dans le trou d'ancrage.

7. Cheville selon l'une des revendications 1, 4 et 5, dans laquelle sont prévus des moyens de positionnement (16, 17 ; 66).

8. Cheville selon l'une des revendications 1 à 7, dans laquelle le fil est un fil semi-cylindrique.

9. Cheville selon l'une des revendications 4 et 5, dans laquelle l'oeillet (53) comporte une nervure (50) pour le raidir.

**Ansprüche**

1. Hängedübel mit einem umgebogenem Draht (1), der eine Befestigungsöse (3) bildet, wobei eines der Drahtenden (1), welches dazu bestimmt ist, in ein Verankerungsloch eingeführt zu werden, so ausgelegt ist, daß es, unter Einwirkung einer Zugkraft, die nach außerhalb des Loches auf die Öse ausgeübt wird, mit Verankerungsvorrichtungen zusammenwirkt, wodurch der Dübel in der Wand des Loches verankert wird, Dübel dadurch gekennzeichnet, daß es sich beim Draht (1) um einen Draht mit ebener Fläche (2) handelt, welcher entlang seiner ebenen Fläche umgebogen ist, und daß die beiden Enden (5, 6) des umgebogenen Drahtes, die der Öse (3) gegenüberliegen, bestimmt sind, in das Verankerungsloch eingeführt zu werden und so ausgelegt sind, daß sie zusammenwirken und einen AusdehnungsKegelstumpf (7) bilden, welcher relativ formbeständig ist, und unter Einwirkung der genannten Zugkraft mit einer dehnbaren Verankerungshülse (11) zusammenwirkt, wodurch der Dübel verankert wird.

2. Hängedübel mit einem umgebogenem Draht (1), der eine Befestigungsöse (3) bildet, wobei eines der Drahtenden (1), welches dazu bestimmt ist, in ein Verankerungsloch eingeführt zu werden, so ausgelegt ist, daß es, unter Einwirkung einer Zugkraft, die nach außerhalb des Loches auf die Öse ausgeübt wird, mit Verankerungsvorrichtungen zusammenwirkt, wodurch der Dübel in der Wand des Loches verankert wird, Dübel dadurch gekennzeichnet, daß es sich beim Draht (1) um einen Draht mit ebener Fläche (29) handelt, welcher entlang seiner ebenen Fläche umgebogen ist, und daß die beiden Enden (25, 26) des umgebogenen Drahtes, die der Öse (3) gegenüberliegen, bestimmt sind, in das Verankerungsloch eingeführt zu werden und jeweils eine Ausdehnungsrampe (27, 28) aufweisen und um einen Ausdehnungskeil (35) gebogen sind, welcher mit den Drahtenden drehfest verbunden ist, so daß sie während der Ausübung der Zugkraft auf die Öse (3) zusammenwirken und einen relativ formbeständigen Körper bilden und sich mit dem Ausdehnungskeil (35) in der Lochwand verankern, wodurch der Dübel verankert wird.

3. Hängedübel mit einem umgebogenem Draht (1), der eine Befestigungsöse (3 ; 53) bildet, wobei eines der Drahtenden (1), welches dazu bestimmt ist, in ein Verankerungsloch eingeführt zu werden, so ausgelegt ist, daß sie, unter Einwirkung einer Zugkraft, die nach außerhalb des Loches auf die öse ausgeübt wird, mit Verankerungsvorrichtungen zusammenwirkt, wodurch der Dübel in der Wand des Loches verankert wird, Dübel dadurch gekennzeichnet, daß es sich beim Draht um einen Draht mit ebener Fläche handelt, welcher entlang seiner ebenen Fläche umgebogen ist, und daß die beiden Enden (5, 6) des umgebogenen Drahtes, die der Öse (3) gegenüberliegen, bestimmt sind, in das Verankerungsloch eingeführt zu werden und so ausgelegt sind, daß sie, unter einwirkung der genannten Zugkraft, zusammenwirken und einen relativ formbeständigen Ausdehnungs-Pyramidenstumpf (21-23) bilden, und mit einer dehnbaren Verankerungshülse, um den Dübel zu verankern.

4. Hängedübel mit einem umgebogenem Draht (1), der eine Befestigungsöse (53) bildet, wobei eines der Drahtenden (1), welches dazu bestimmt ist, in ein Verankerungsloch eingeführt zu werden, so ausgelegt ist, daß es, unter Einwirkung einer Zugkraft, die nach außerhalb des Loches auf die Öse ausgeübt wird, mit Verankerungsvorrichtungen Zusammenwirkt, wodurch der Dübel in der Wand des Loches verankert wird, Dübel dadurch gekennzeichnet, daß der Draht durch Gesenkformen von Bandmaterial (41) hergestellt wird, und daß die beiden Enden (55, 56) des Drahtes bestimmt sind, in das Verankerungsloch eingeführt zu werden und so ausgelegt sind, daß sie, unter Einwirkung der genannten Zugkraft so zusammenwirken, daß sie ein zylindrisches Teil (54) bilden, welches aus zwei Schalen (43', 43") besteht, sowie einen Expansions-Kegelstumpf (57), welcher so ausgelegt ist, daß er mit einer dehnbaren Verankerungshülse (61) zusammenwirkt, wodurch der Dübel verankert wird.

5. Dübel gemäß Anspruch 4, bei welchem Vorrichtungen vorgesehen sind, um die Verformung des Endkörpers (60, 57, 54) zu verhindern, und welche eine Verschlußscheibe aufweisen, die aus einer heruntergeklappten Verlängerung (48) einer (43') der beiden Schalen gebildet wird und die sich auf der anderen (43") der beiden Schalen abstützt, aus welchen das zylindrische Endteil (54) zusammengesetzt ist.

6. Dübel gemäß einem der Ansprüche 1 und 2, bei welchem die Verankerungsvorrichtungen (11 ; 35) Vorrichtungen (15 ; 36, 37) zum Stoppen der Translationsbewegung im Verankerungsloch aufweisen.

7. Dübel gemäß einem der Ansprüche 1, 4 und 5, bei welchem Positionierungsvorrichtungen (16, 17 ; 66) vorgesehen sind.

8. Dübel gemäß einem der Ansprüche 1 bis 7, bei welchem der Draht ein halbzylindrischer Draht ist.

9. Dübel gemäß einem der Ansprüche 4 und 5, bei welchem die Öse (53) eine Verstarkungsrippe (50) aufweist.

## Claims

1. Suspension peg including a wire (1) bent on itself so as to form a securing eye (3), one of the ends of the wire (1), intended to be fitted into an anchorage hole, being adapted so as to cooperate, under the action of a tractive force exerted outwardly of the hole on the eye, with anchorage means and to anchor the peg in the wall of the hole, peg characterized by the fact that the wire (1) is a wire with flat face (2) bent on itself along its flat face, the two ends (5, 6) of the bent wire, opposite the eye (3), being intented to be fitted in the anchorage hole and they are adapted for cooperating together and forming a relatively indeformable truncated expansion cone (7) adapted for, under the action of said tractive force, cooperating with an expandable anchorage socket (11) and anchoring the peg.

2. Suspension peg including a wire (1) bent on itself so as to form a securing eye (3), one of the ends of the wire (1), intended to be fitted into an anchorage hole, being adapted so as to cooperate, under the action of a tractive force exerted outwardly of the hole on the eye, with anchorage means and to anchor the peg in the wall of the hole, peg characterized by the fact that the wire is a wire with flat face (29) bent on itself along its flat face, the two ends (25, 26) of the bent wire, opposite the eye (3), being intended to be fitted in the anchorage hole and they each comprise an expansion ramp (27, 28) and are bent over an expansion wedge (35), rotatably fast with the ends of the wire, so as to, when said tractive force is exerted on the eye (3), cooperate together, by forming a relatively indeformable body, and, with the expansion wedge (35), anchor themselves in the wall of the hole and anchor the Peg.

3. Suspension peg including a wire (1) bent on itself so as to form a securing eye (3 ; 53), one of the ends of the wire (1), intended to be fitted into an anchorage hole, being adapted so as to cooperate, under the action of a tractive force exerted outwardly of the hole on the eye, with anchorage means and to anchor the peg in the wall of the hole, peg characterized by the fact that the wire is a wire with flat face bent on itself along its flat face, the two ends (5, 6) of the bent wire, opposite the eye (3), being intended to be fitted in the anchorage hole and they are adapted for cooperating together under the action of said tractive force, by forming a relatively indeformable truncated expansion pyramid (21-23) and with an expandable anchorage socket for anchoring the peg.

4. Suspension peg including a wire (1) bent on itself so as to form a securing eye (53), one of the ends of the wire (1), intended to be fitted into an anchorage hole, being adapted so as to cooperate, under the action of a tractive force exerted outwardly of the hole on the eye, with anchorage means and to anchor the peg in the wall of the hole, peg characterized by the fact that the wire is obtained by die stamping a metal strip (41), the two ends (55, 56) of the wire are intended to be fitted in the anchorage hole and they are adapted for, under the action of said tractive force, cooperating together, by forming a cylindrical portion (54), formed by two shells (43',43"), as well as a truncated expansion cone (57) adapted for cooperating with an expandable anchorage socket (61) and anchoring the peg.

5. Peg according to claim 4, wherein means are provided for preventing the deformation of the end body (60, 57, 54) which include a closure disk formed by a bent back extension (48) of one (43') of the two shells and bears on the other one (43") of the two shells constituting the cylindrical end portion (54).

6. Peg according to one of claims 1 and 2, wherein the anchorage means (11 ; 35) include means (15 ; 36, 37) for immobilizing them in translation in the anchorage hole.

7. Peg according to one of claims 1, 4 and 5, wherein positioning means (16, 17 ; 66) are provided.

8. Peg according to one of claims 1 to 7, wherein the wire is a semicylindrical wire.

9. Peg according to one of claims 4 and 5, wherein the eye (53) includes a rib (50) for stiffening it.

FIG.1

EP 0 280 625 B1

FIG.2

FIG.3

FIG.4

FIG.5

FIG. 6

FIG. 7

FIG. 8

FIG. 9

FIG. 10

FIG. 11

FIG. 12